# EUROPÄISCHE PATENTSCHRIFT

(11) **EP 3 854 731 B1**
(45) Veröffentlichungstag und Bekanntmachung des Hinweises auf die Patenterteilung: **20.03.2024**
(21) Anmeldenummer: 20153602.6
(22) Anmeldetag: 24.01.2020
(51) Int. Cl.: B65G 47/32, G01B 5/08, B65G 1/137, B65G 47/91

(54) **VORRICHTUNG UND VERFAHREN ZUM VEREINZELN VON STÜCKGÜTERN**
DEVICE AND METHOD FOR SEPARATED PIECE GOODS
DISPOSITIF ET PROCÉDÉ DE SÉPARATION DE MARCHANDISES DE DÉTAIL

(43) Veröffentlichungstag der Anmeldung: 28.07.2021
(73) Patentinhaber: Becton Dickinson Rowa Germany GmbH, 53539 Kelberg (DE)
(72) Erfinder: KLAPPERICH, Andreas, 56745 Rieden (DE)
(74) Vertreter: Zenz Patentanwälte Partnerschaft mbB

(56) Entgegenhaltungen:
- EP-A1- 1 748 004
- EP-A2- 2 194 008
- WO-A1-2006/095047
- DE-A1- 4 318 341
- DE-A1- 10 225 332
- IT-A1- TO20 110 377

## Beschreibung

Die vorliegende Erfindung betrifft eine Vorrichtung und ein Verfahren zum Vereinzeln von in eine Kommissioniervorrichtung einzulagernden Stückgütern, und insbesondere zum Vereinzeln von in eine Apotheken-Kommissioniervorrichtung einzulagernden Arzneimittelpackungen.

In modernen Apotheken-Kommissioniervorrichtung werden eine Vielzahl unterschiedlicher Arzneimittelpackungen nach dem Prinzip der chaotischen Lagerung eingelagert und bei Bedarf mit einem Bediengerät ausgelagert. Die Einlagerung der Arzneimittelpackungen orientiert sich dabei nach den in der Kommissioniervorrichtung vorhandenen freien Lagerplätzen und, bei dem Prinzip der chaotischen Lagerung, nicht nach der Art des Arzneimittels, d. h. die Packungen werden bei dieser Art der Lagerung nicht sortenrein eingelagert. Zum Einlagern der Arzneimittelpackungen können diese von einem Benutzer beispielsweise auf einem Einlagerungsband abgelegt werden, mittels welchem die Arzneimittelpackungen dann in die Kommissioniervorrichtung bewegt werden. Mit dem Bediengerät der Kommissioniervorrichtung werden die Arzneimittelpackungen dann von dem Einlagerungsband abgegriffen und zu einem von einer Steuereinrichtung vorbestimmten Lagerplatz bewegt und auf diesem angeordnet. In Abhängigkeit von der Anzahl der einzulagernden Arzneimittelpackungen kann der Vorgang der Einlagerung einer Anzahl von Arzneimittelpackungen relativ zeitaufwendig sein, so dass es aus dem Stand der Technik bekannt ist, Apotheken-Kommissioniervorrichtungen mit automatisierten Vorrichtungen zum Vereinzeln von Stückgütern zu kombinieren. Mit diesen werden aus einer Mehrzahl von Stückgütern vereinzelte Stückgüter bereitgestellt, welche dann identifiziert und eingelagert werden.

Aus dem Stand der Technik sind solche Vorrichtungen zum Vereinzeln von Stückgütern bekannt. In der WO 2012/167846 A1 beispielsweise ist eine Vorrichtung zum Vereinzeln von Stückgütern bekannt, welche eine Einrichtung zum Fördern von Stückgütern aus einem Vorrat von Stückgütern auf eine Auflagefläche einer Auffangeinrichtung umfasst. Die Fördereinrichtung vereinzelt die Stückgüter, indem ein schräg angeordneter Schieber unter den Vorrat der Stückgüter verfahren wird, um so ein Stückgut auf die Auflagefläche zu bewegen. In Abhängigkeit von der Größe des Schiebers und der Stückgüter des Vorrates kann es jedoch vorkommen, dass nicht ein Stückgut auf die Auflagefläche bewegt wird, sondern zwei oder gar drei. Dies ist auch abhängig davon, wie die Stückgüter in dem Vorrat orientiert sind, d. h. ob beispielsweise mehrere Stückgüter aufliegend auf ihrer schmalsten Seitenfläche in dem Vorrat vorhanden sind, die dann mit einer Bewegung des Schiebers alle auf die Auflagefläche bewegt werden. Daraus resultiert, dass die Stückgüter in einer beliebigen Ausrichtung auf der Auflagefläche angeordnet werden, d. h. dass es mit der bekannten Vorrichtung nicht möglich ist, die Stückgüter vereinzelt und auf einer vorgegebenen Seitenfläche aufliegend bereitzustellen.

Die DE 43 18 341 A1 offenbart eine Vorrichtung nach dem Oberbegriff des Anspruchs 1.

Es ist Aufgabe der vorliegenden Erfindung, eine Vorrichtung und ein entsprechendes Verfahren bereitzustellen, mit welcher bzw. welchem es möglich ist, Stückgüter vereinzelt und auf einer vorgegebenen Seitenfläche aufliegend bereitzustellen.

Die Aufgabe wird durch eine erfindungsgemäße Vorrichtung nach Anspruch 1 und ein erfindungsgemäßes Verfahren nach Anspruch 7 zum Vereinzeln von in eine Kommissioniervorrichtung einzulagernden Stückgütern gelöst. Die erfindungsgemäße Vorrichtung umfasst eine Zuführeinrichtung zum Bereitstellen einer Mehrzahl von nicht vereinzelten Stückgütern in einem sich in einer X- und Y-Richtung der Vorrichtung erstreckenden Aufnahmebereich, eine in Z-Richtung, orthogonal zur X- und Y-Richtung, oberhalb der Zuführeinrichtung angeordnete obere 3D-Erfassungseinrichtung zum Erfassen von 3D-Bildern von auf der Zuführeinrichtung in dem Aufnahmebereich angeordneten Stückgütern, eine mit der oberen 3D-Erfassungseinrichtung gekoppelte Steuereinrichtung zum Auswerten von mit der oberen 3D-Erfassungseinrichtung ermittelten 3D-Bildern und zum Bestimmen eines aus der Mehrzahl von Stückgütern aufzunehmenden Stückgutes. Die Auswertung der 3D-Bilder erfolgt mit üblicher Bildverarbeitungssoftware, mit dem Ziel, in dem 3D-Bild unterschiedliche Objekte (nämlich die Stückgüter) zu detektieren und festzulegen, welches Stückgut als nächstes aufgenommen werden kann bzw. aufgenommen wird. So ist es beispielsweise denkbar, dass bei der Mehrzahl von Stückgütern mehrere übereinander liegen, so dass ein unten liegendes Stückgut von beispielsweise einem aufliegenden Stückgut derart überlagert wird, dass nur das teilweise aufliegende Stückgut aufgenommen werden kann, nicht aber das unten liegende. Wie genau die Bildverarbeitung und das Bestimmen des aufzunehmenden Stückgutes durchgeführt wird, ist für die vorliegende Erfindung unwesentlich, es können sämtliche dem Fachmann insbesondere unter dem Begriff des "maschinellen Sehens" bekannte Lösungsansätze verwendet werden.

Die erfindungsgemäße Vorrichtung umfasst ferner eine mit der Steuereinrichtung gekoppelte Fördereinrichtung mit einem um die Z-Achse (also die Vertikalachse) drehbaren Greifmittel zum Aufnehmen eines von der Steuereinrichtung bestimmten Stückgutes aus der Mehrzahl von Stückgütern, eine in X-Richtung stromab des Aufnahmebereichs angeordnete Ablagefläche zum Ablegen von mit der Fördereinrichtung aufgenommenen Stückgütern sowie eine seitliche Erfassungseinrichtung zum Erstellen von zumindest einem Bild eines von der Fördereinrichtung aufgenommenen Stückgutes. Erfindungsgemäß ist die Steuereinrichtung so konfiguriert, dass das zumindest eine mit der seitlichen Erfassungseinrichtung erstellte Bild zum Ermitteln der Dimensionen des aufgenommenen Stückgutes verarbeitet wird. Sollte bei der Bearbeitung festgestellt werden, dass nicht alle Dimensionen des aufgenommen Stückgutes aus dem Bild ermittelt werden konnten, wird das mit dem Greifmittel aufgenommene Stückgut um einen vorgegebenen Winkel um die Z-Achse gedreht und ein weiteres Bild erstellt, das dann entsprechend bearbeitet wird, wobei dieser Vorgang so lange wiederholt wird, bis alle Dimensionen des Stückgutes ermittelt sind. Um welchen Winkel das aufgenommene Stückgut gedreht wird, gibt die Steuereinrichtung vor, wobei dieser Wert ein fest programmierter sein kann oder sich aus der Bearbeitung des vorhergehenden Bildes ergibt. Basierend auf den Ergebnissen der Bildverarbeitung bzw. den Dimensionen des aufgenommenen Stückgutes wird die Ausrichtung des aufgenommenen Stückgutes ermittelt und in Abhängigkeit von Vorgaben durch die Steuereinrichtung die bevorzugte Einlagerungsfläche des aufgenommenen Stückgutes festgelegt. Die Fördereinrichtung wird in Abhängigkeit von der Ausrichtung und der bevorzugten Einlagerungsfläche von der Steuereinrichtung dann derart angesteuert, dass ein aufgenommenes Stückgut auf einer bevorzugten Einlagerungsfläche auf der Ablagefläche angeordnet wird.

Die erfindungsgemäße Vorrichtung umfasst also nicht nur eine 3D-Erfassungseinrichtung zum Festlegen des Stückgutes, welches als nächstes von dem Vorrat entnommen werden soll, sondern eine weitere Erfassungseinrichtung, die ein oder mehrere Bilder des aufgenommenen Stückgutes macht, wobei anhand dieses Bildes bzw. dieser Bilder die Dimensionen des aufgenommenen Stückgutes bestimmt werden können, so dass die Ausrichtung des aufgenommenen Stückgutes ermittelt werden kann. Die Dimensionen des aufgenommenen Stückgutes können nämlich nicht ohne weiteres aus dem 3D-Bild der oberen 3D-Erfassungseinrichtung übernommen werden, da es nicht sichergestellt ist, dass mit der oberen 3D-Erfassungseinrichtung das gesamte Stückgut erfasst ist. Ferner ist es mit der oberen 3D-Erfassungseinrichtung regelmäßig nicht möglich, die Höhe eines aufzunehmenden bzw. aufgenommenen Stückgutes zu ermitteln. Durch Verwendung der seitlichen Erfassungseinrichtung jedoch können die drei Dimensionen des aufgenommenen Stückgutes problemlos bestimmt werden, so dass die Ausrichtung des aufgenommenen Stückgutes bestimmt werden kann, d. h. ob beispielsweise die größte Auflagefläche des Stückgutes unten, an der Seite, oder der Stirnfläche des Stückgutes angeordnet ist. Bei der seitlichen Erfassungseinrichtung kann es sich um eine 2D- oder 3D-Erfassungseinrichtung handeln. Bei Verwendung einer 2D-Erfassungseinrichtung muss das aufgenommene Stückgut zur Bestimmung von allen Dimensionen um die Vertikalachse gedreht werden und es müssen dann zumindest zwei Bilder erstellt und ausgewertet werden. Wird eine 3D-Erfassungseinrichtung verwendet, kann bei entsprechender Positionierung der 3D-Erfassungseinrichtung ein Bild ausreichen, um sämtliche Dimensionen des aufgenommenen Stückgutes zu bestimmen; regelmäßig wird aber auch in einem solchen Fall ein Drehen um die Z-Achse notwendig sein.

Als 3D-Erfassungseinrichtung kann beispielsweise eine 3D-Kamera verwendet werden. 3D-Kameras sind Kamerasysteme, die die bildliche Darstellung von Entfernungen einer ganzen Szene erlauben. Unter den Begriff der 3D-Kameras sollen hier insbesondere folgende Systeme gefasst werden:
- Stereokameras, bei welchen die Umgebung mit zwei Kameras gleichzeitig aufgenommen wird, wobei der Abstand der Kameraobjektive üblicherweise dem menschlichen Augenabstand entspricht. Das resultierende Bildpaar kann in einem Rechner (einer Steuereinrichtung) verarbeitet werden und so eine Tiefenkarte erstellt werden.
- Triangulationssysteme, bei denen eine Lichtquelle ein definiertes Muster auf das Objekt abbildet. Eine Kamera nimmt dieses Muster aus einem anderen Blickwinkel auf und berechnet aus der Verzerrung die Distanz bzw. eine Tiefenkarte.
- TOF-Kameras (time of flight-Kameras), welche über Laufzeitmessung des Lichtes auf die Distanz schließen.
- Interferometriesystem, welche mit Interferenzen zwischen einem Mess- und Objektstrahl arbeiten.
- Lichtfeldkameras, bei welchen auf Kosten der Auflösung mit Hilfe von Mikrolinsenarrays neben der Helligkeit eines Bildpunkts auch die Lichtrichtung der Strahlen, die zu einem Bildpunkt führen, aufgezeichnet werden, wobei sich aus diesen Daten dann eine Tiefenkarte berechnen lässt.

In Kenntnis der Ausrichtung des aufgenommenen Stückgutes und unter Berücksichtigung einer von der Steuervorrichtung vorgegebenen bevorzugten Einlagerungsfläche, bei welcher es sich regelmäßig um die größte Auflagefläche eines Stückgutes handeln wird, kann das Stückgut dann auf eben dieser Einlagerungsfläche auf der Ablagefläche angeordnet werden. In Abhängigkeit der Ausrichtung des aufgenommenen Stückgutes kann es dazu ausreichend sein, das Stückgut einfach auf der Ablagefläche abzulegen, nämlich dann, wenn das Stückgut an einer bevorzugten Einlagerungsfläche aufgenommen ist. Wenn beispielsweise die bevorzugte Auflagefläche durch eine Seitenfläche des aufgenommenen Stückgutes bereitgestellt ist, muss das Stückgut nach dem Aufsetzen auf der Ablagefläche gekippt werden, was beispielsweise durch die Fördereinrichtung geschehen kann. Dazu kann man die Fördereinrichtung neben dem Stückgut platzieren und das Stückgut dann mit der Fördereinrichtung umkippen.

Bei einer bevorzugten Ausführungsform der erfindungsgemäßen Vorrichtung ist die seitliche Erfassungseinrichtung als eine 3D-Erfassungseinrichtung ausgebildet. Wie bereits oben dargelegt, vermindert die Verwendung einer 3D-Erfassungeinrichtung die zum Erfassen sämtlicher Dimensionen nach dem Aufnehmen notwendigen Bilder - im Idealfall reicht ein 3D-Bild zum Ermitteln sämtlicher Dimensionen.

Wie genau die Fördereinrichtung ausgestaltet ist, ist insbesondere von den zu erwartenden Dimensionen und Gewichten der zu vereinzelnden Stückgüter abhängig. Für den Fall einer Apotheken-Kommissioniervorrichtung sind diese Abmessungen und Gewichte zum einen relativ gering, zum anderen unterliegen sie relativ geringen Schwankungen. Bei einer bevorzugten Ausführungsform ist es daher vorgesehen, dass die Fördereinrichtung als ein in X-, Y- und Z-Richtung bewegbarer Sauggreifer mit zumindest einem um die Z-Achse drehbaren Saugkopf ausgebildet ist. Die Verwendung eines Sauggreifers ermöglicht auch die Aufnahme solcher Stückgüter, deren Aufnahme anderenfalls durch ungünstig angeordnete benachbarte Stückgüter verhindert oder erschwert wird. Die Drehbarkeit des Saugkopfes um die Z-Achse kann erreicht werden, indem nur der Saugkopf selbst drehbar ist - alternativ kann auch der ganze Sauggreifer oder ein den Saugkopf tragendes Bauteil um die Z-Achse drehbar sein und so den Saugkopf "mitdrehen".

Um die Aufnahme eines Stückgutes an die Dimensionen des Stückgutes selbst anzupassen, ist es bei einer bevorzugten Ausführungsform der erfindungsgemäßen Kommissioniervorrichtung vorgesehen, dass der Sauggreifer zwei unterschiedlich dimensionierte Saugköpfe aufweist, so dass es möglich ist, situationsbedingt den Saugkopf auszuwählen, der für das nächste aufzunehmende Stückgut am besten geeignet ist. So ist es denkbar, dass als nächstes Stückgut ein solches mit einer sehr schmalen Aufnahmefläche bestimmt wird, die nur mit einem kleinen Saugkopf vernünftig greifbar ist, bei anderen Fällen ist es denkbar, dass die Wahl des größeren Saugkopfes günstiger ist, um insbesondere die Stabilität des aufgenommenen Stückgutes an dem Saugkopf zu gewähren.

Um die Wahl zwischen den zumindest zwei verschiedenen Saugköpfen rasch realisieren zu können, ist es bei einer bevorzugten Ausführungsform der Kommissioniervorrichtung vorgesehen, dass der Sauggreifer einen Drehkörper aufweist, an welchem die Saugköpfe angeordnet sind, wobei der Drehkörper um eine sich horizontal erstreckende Drehachse drehbar ist. Bei einer entsprechenden Ausgestaltung des Sauggreifers ist ein rascher und konstruktiv einfacher Wechsel zwischen den unterschiedlich dimensionierten Saugköpfen möglich.

Bei einer bevorzugten Ausführungsform der erfindungsgemäßen Kommissioniervorrichtung ist es vorgesehen, dass die Ablagefläche drehbar ausgebildet ist - auf diese Weise kann man das abgelegte Stückgut noch besser für die nachfolgende Einlagerung bzw. den vorgeschalteten Abtransport von der Ablagefläche vorbereiten.

Die erfindungsgemäße Aufgabe wird ferner gelöst durch ein Verfahren nach Patentanspruch 7. Erfindungsgemäß wird
a) mit einer Zuführeinrichtung eine Mehrzahl von nicht vereinzelten Stückgütern in einem sich in einer X- und Y-Richtung erstreckenden Aufnahmebereich angeordnet,
b) mit einer in Z-Richtung, orthogonal zur X- und Y-Richtung, oberhalb der Zuführeinrichtung angeordneten oberen 3D-Erfassungseinrichtung zumindest ein 3D-Bild der Mehrzahl von nicht vereinzelten Stückgütern erstellt,
c) mit einer mit der 3D-Erfassungseinrichtung gekoppelten Steuereinrichtung das zumindest eine 3D-Bild zum Ermitteln der Lage der nicht vereinzelten Stückgüter verarbeitet und es wird bestimmt, welches Stückgut von der Mehrzahl der Stückgüter als nächstes aufgenommen wird. Sobald ein solches Stückgut bestimmt ist, wird dieses
d) mit einem um die Z-Achse drehbaren Greifmittel einer Fördereinrichtung aufgenommen,
e) mit einer seitlichen, mit der Steuereinrichtung gekoppelten Erfassungseinrichtung zumindest ein Bild des aufgenommenen Stückgutes erstellt und
f) das zumindest eine von der seitlichen Erfassungseinrichtung erstellte Bild zum Ermitteln der Dimensionen des aufgenommenen Stückgutes verarbeitet,
g) wobei dann, wenn nicht alle Dimensionen des aufgenommenen Stückgutes bestimmbar sind, das mit dem Greifmittel aufgenommenen Stückgut um einen vorgegebenen Winkel um die Z-Achse gedreht wird und die Schritte e) und f) so lange wiederholt werden, bis alle Dimensionen des aufgenommenen Stückgutes ermittelt sind, und
h) basierend auf den Ergebnissen der Bildverarbeitung wird die Ausrichtung des aufgenommenen Stückgutes ermittelt und, in Abhängigkeit von Vorgaben durch die Steuereinrichtung, die bevorzugte Einlagerungsfläche des aufgenommenen Stückgutes festgelegt. Anschließend wird
i) das aufgenommene Stückgut zu einer in X-Richtung stromab des Aufnahmebereichs angeordneten Ablagefläche bewegt und
j) auf einer bevorzugten Einlagerungsfläche, die in Verfahrensschritt f) bestimmt wurde, auf der Ablagefläche angeordnet.

Wie bereits oben angedeutet, kann es dazu in Abhängigkeit der Ausrichtung des aufgenommenen Stückgutes ausreichend sein, dieses wie aufgenommen abzulegen - dies ist dann ausreichend, wenn das Stückgut an einer Einlagerungsfläche aufgenommen ist. Ist dies nicht der Fall, kann das Stückgut nach einem ersten Aufsetzen umpositioniert werden. Bei einer bevorzugten Ausführungsform des erfindungsgemäßen Verfahrens ist es dazu vorgesehen, dass das mit dem Greifmittel aufgenommene Stückgut auf einer Einlagerungsfläche angeordnet wird, indem es zunächst auf einer anderen Fläche auf die Ablagefläche angeordnet wird und anschließend auf die Einlagerungsfläche gekippt wird. Dies kann beispielsweise schlicht mit der Fördereinrichtung durchgeführt werden, indem diese neben das Stückgut bewegt wird und dieses mit der Fördereinrichtung gekippt wird.

Bei einer bevorzugten Ausführungsform des Verfahrens ist es vorgesehen, dass mit der seitlichen Erfassungseinrichtung ein 3D-Bild des mit dem Greifmittel aufgenommenen Stückgutes erstellt wird. Auf diese Weise kann die Anzahl der Bilder, die zum Ermitteln der Dimensionen des aufgenommenen Stückgutes notwendig sind, vermindert werden. Im Idealfall reicht ein 3D-Bild aus, um alle drei Dimensionen zu bestimmen.

Um die Flexibilität beim Anordnen des Stückgutes auf der Ablagefläche zu erhöhen, ist es bei einer bevorzugten Ausführungsform des Verfahrens vorgesehen, dass das mit dem Greifmittel aufgenommene Stückgut vor dem Anordnen auf der Ablagefläche nach Vorgaben der Steuereinrichtung um die Z-Achse (also die Vertikalachse) gedreht wird. So kann eine für eine nachfolgende Einlagerung optimale Ausrichtung erzielt werden, wobei die "optimale" Ausrichtung von beispielsweise den freien Lagerplätzen in der Kommissioniervorrichtung abhängig sein kann.

Bei einer weiteren bevorzugten Ausführungsform des erfindungsgemäßen Verfahrens wird das mit dem Greifmittel aufgenommene Stückgut zum Bestimmen eines Identifizierers um die Z-Achse gedreht und dabei von der seitlichen Erfassungseinrichtung abgetastet. Sofern ein solcher ermittelt werden kann, kann der üblicherweise nachfolgende, aber mit der Vereinzelung selbst nicht zusammenhängende Verfahrensschritt der Identifikation des Stückgutes, übersprungen werden, was den Gesamtvorgang der Einlagerung beschleunigt.

Nachfolgend wird eine bevorzugte Ausführungsform der erfindungsgemäßen Vorrichtung sowie des erfindungsgemäßen Verfahrens unter Bezugnahme auf die Zeichnung beschrieben, in welcher
Figuren 1a und 1b eine Schrägansicht der bevorzugten Ausführungsform der erfindungsgemäßen Vorrichtung darstellen, wobei bei Figur 1b in Figur 1a angedeutete Erfassungsbereiche der Erfassungseinrichtungen fortgelassen sind;
Figur 2 eine weitere Schrägansicht der bevorzugten Ausführungsform mit Stückgütern zeigt;
Figur 3 eine Draufsicht der bevorzugten Ausführungsform mit Stückgütern zeigt;
Figur 4 die Ausführungsform von hinten, d. h. auf die Fördereinrichtung blickend, zeigt;
Figuren 5a und 5b eine Schrägansicht und eine Hinteransicht einer ersten Verfahrenssituation der bevorzugten Ausführungsform des erfindungsgemäßen Verfahrens zeigen;
Figuren 6a und 6b eine zweite Verfahrenssituation der bevorzugten Ausführungsform des erfindungsgemäßen Verfahrens zeigen;
Figuren 7a - 7c Vorderansichten weiterer Verfahrenssituationen der bevorzugten Ausführungsform des Verfahrens zeigen, und zwar das Aufsetzen und Umkippen eines aufgenommenen Stückgutes auf der Ablagefläche;
Figuren 8a und 8b Seitenansichten verschiedener Verfahrenssituationen zeigen; und
Figur 9 ein Ablaufdiagramm der bevorzugten Ausführungsform des Verfahrens zeigt.

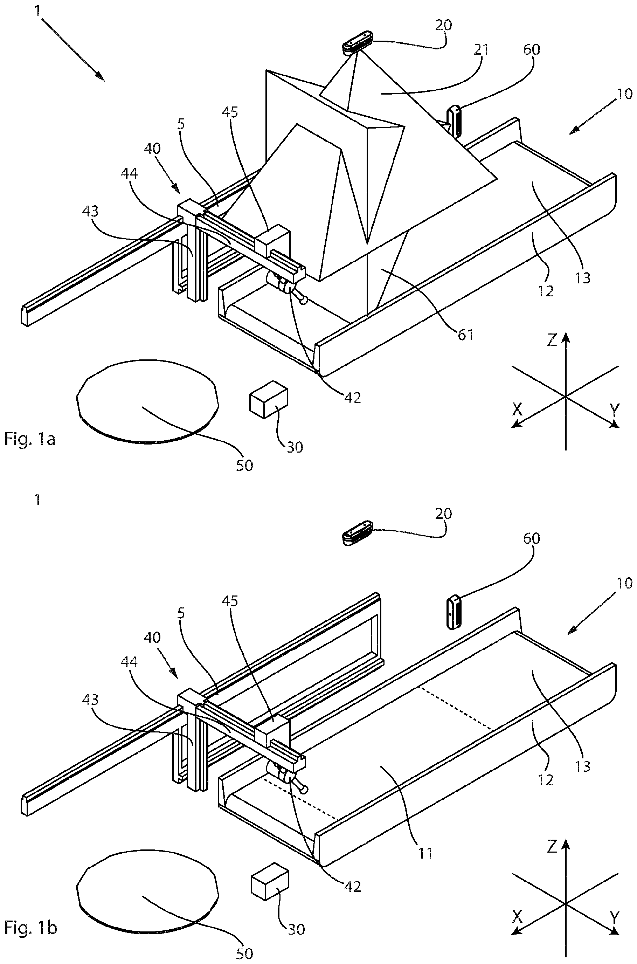

Figuren 1a und 1b zeigen Schrägansichten einer bevorzugten Ausführungsform der erfindungsgemäßen Vorrichtung 1 zum Vereinzeln von in eine Kommissioniervorrichtung einzulagernden Stückgütern, wobei als Stückgüter insbesondere Arzneimittelpackungen in Frage kommen, die in einer Apotheken-oder Krankenhaus-Kommissioniervorrichtung einzulagern sind. Die dargestellte Ausführungsform umfasst eine Zuführeinrichtung 10, welche bei der gezeigten Ausführungsform ein Förderband 13 mit zwei Seitenbanden 12 umfasst, die ein Herunterfallen von Stückgütern verhindern sollen. Wie es in Figur 1b angedeutet ist, ist im "linken" Abschnitt des Förderbandes ein Bereich 11 vorgesehen, wobei es sich bei diesem Bereich um einen Aufnahmebereich 11 handelt, in welchem Stückgüter angeordnet werden, wie es bei nachfolgenden Figuren zu erkennen ist. Der Aufnahmebereich 11 erstreckt sich in der X- und Y-Richtung der Vorrichtung, wobei die X- und Y-Richtung eine Ebene definieren. In Z-Richtung, die orthogonal zu der durch die X- und Y-Richtung aufgespannten Ebene angeordnet ist, oberhalb der Zuführeinrichtung 10 ist eine 3D-Erfassungseinrichtung 20 mit einem Erfassungsbereich 21 angeordnet, mit welcher 3D-Bilder der in dem Aufnahmebereich 11 angeordneten Stückgüter erstellt werden.

Die gezeigte Ausführungsform der erfindungsgemäßen Kommissioniervorrichtung 1 umfasst ferner einen seitlich der Zuführeinrichtung 10 angeordneten Führungsrahmen 5, an welchem eine Fördereinrichtung 40 bewegbar angeordnet ist, die bei der gezeigten Ausführungsform als ein Sauggreifer ausgebildet ist. Der Sauggreifer umfasst eine Z-Führung 43, die selbst in X-Richtung an dem Führungsrahmen 5 verfahrbar ist. An dieser Z-Führung 43 ist eine Y-Führung 44 in Z-Richtung verfahrbar, wobei an der Y-Führung 44 wiederum eine Halterung 45 in Y-Richtung verfahrbar ist. An der Halterung 45 (bzw. einer in den nachfolgenden Figuren gezeigten Drehkörperhalterung 46) ist ein Drehkörper 42 befestigt, an welchem wiederum zwei als Saugköpfe ausgebildete Greifmittel angeordnet sind, wie dies unter Bezugnahme auf nachfolgende Figuren genauer dargestellt ist.

Stromauf der Fördereinrichtung 40 ist eine seitliche Erfassungseinrichtung 60 mit einem Erfassungsbereich 61 angeordnet, und stromab der Zuführeinrichtung 10 ist eine Ablagefläche 50 zum Ablegen von mit der Fördereinrichtung 40 aufgenommenen Stückgütern angeordnet. Schließlich umfasst die Kommissioniervorrichtung 1 eine Steuereinrichtung 30, die über nicht dargestellte Leitungen mit der oberen 3D-Erfassungseinrichtung 20, der seitlichen Erfassungseinrichtung 60 sowie der Fördereinrichtung 40 und ggf. der Zuführeinrichtung 10 gekoppelt ist. Erfindungsgemäß ist die Steuereinrichtung 30 derart konfiguriert, dass ein mit der seitlichen Erfassungseinrichtung 60 erstelltes Bild zum Ermitteln der Dimensionen des aufgenommenen Stückgutes verarbeitet wird.

Die Verarbeitung sowie die Anzahl der Bilder ist abhängig von der Art und Weise der seitlichen Erfassungseinrichtung. Wird eine 3D-Erfassungseinrichtung verwendet, wie dies bei der gezeigten Ausführungsform der Fall ist, kann es bei entsprechender Platzierung der Erfassungseinrichtung in Bezug auf den Aufnahmebereich 11 ausreichend sein, lediglich ein Bild eines aufgenommenen Stückgutes zu erstellen und dieses zu verarbeiten, um alle drei Dimensionen zu ermitteln. Regelmäßig wird es aber erforderlich sein, auch bei Verwendung einer 3D-Erfassungseinrichtung mehrere 3D-Bilder zu erstellen, um alle Dimensionen zu bestimmen. Vor dem Erstellen eines nachfolgenden Bildes wird das aufgenommene Stückgut um einen vorgegebenen Winkel X gedreht. Der Vorgang wird dabei so lange wiederholt, bis alle drei Dimensionen des Stückgutes ermittelt sind. Sofern eine 2D-Erfassungseinrichtung verwendet wird, ist es in jedem Fall erforderlich, zumindest zwei Bilder zu erstellen, die das aufgenommene Stückgut in anderer Perspektive wiedergeben. Dazu kann das Stückgut nach dem Erstellen des ersten Bildes um beispielsweise 90° um die Z-Achse gedreht werden.

Basierend auf den Ergebnissen der Bildverarbeitung wird die Ausrichtung des aufgenommenen Stückgutes ermittelt, wobei anhand der Ausrichtung des aufgenommenen Stückgutes auch ermittelt wird, wo beispielsweise die größte Auflagefläche des aufgenommenen Stückgutes angeordnet ist. In Abhängigkeit von der Anordnung des Stückgutes vor seiner Aufnahme kann diese die Ansaugfläche des Stückgutes (und ihre Gegenfläche) darstellen, es ist aber auch möglich, dass die Seitenfläche oder die Stirnfläche (bezogen auf die X-Richtung der Vorrichtung) die größte Auflagefläche des Stückgutes sind.

Basierend auf Vorgaben der Steuereinrichtung, die diese Vorgaben von einer Steuereinrichtung einer Kommissioniervorrichtung erhalten kann, in welche die Stückgüter eingelagert werden sollen, wird die bevorzugte Einlagerungsfläche des aufgenommenen Stückgutes festgelegt, wobei es sich bei dieser bevorzugten Einlagerungsfläche regelmäßig um die größte Auflagefläche des aufgenommenen Stückgutes handeln wird. Über die Steuereinrichtung der Vorrichtung zum Vereinzeln von Stückgütern wird dann die Fördereinrichtung derart angesteuert, dass ein aufgenommenes Stückgut auf einer bevorzugten Einlagerungsfläche auf der Ablagefläche 50 angeordnet wird, wobei dies unter Bezugnahme auf nachfolgende Figuren detaillierter beschrieben wird.

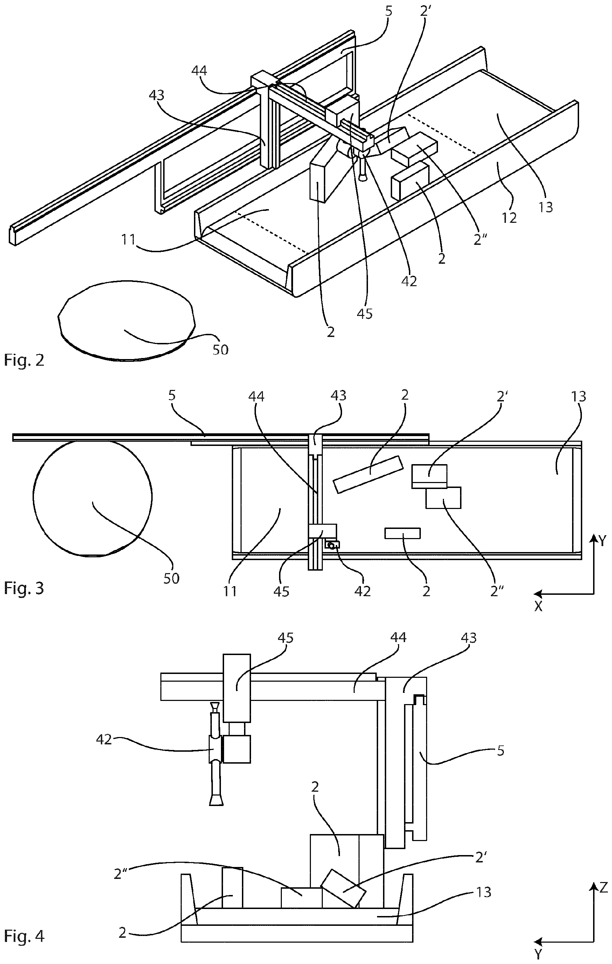

Figuren 2, 3 und 4 zeigen eine Schrägansicht, eine Draufsicht sowie eine Hinteransicht der bevorzugten Ausführungsform der erfindungsgemäßen Vorrichtung, wobei bei den Figuren 2 - 4 vier Stückgüter in dem Aufnahmebereich 11 der Zuführeinrichtung 10 angeordnet sind. Zwei der Stückgüter, die mit dem Bezugszeichen 2 gekennzeichnet sind, sind freistehend in dem Aufnahmebereich angeordnet, das Stückgut 2" ist zum Teil von dem Stückgut 2' überlagert, wie es insbesondere bei der Hinteransicht von Figur 4 zu erkennen ist. Bei der Hinteransicht wird "von hinten" über die Zuführeinrichtung 10 in X-Richtung hin zu der Ablagefläche 50 geschaut, wohingegen bei der Vorderansicht von der Ablagefläche 50 in X-Richtung zur Zuführeinrichtung 10 geschaut wird. Bei der gezeigten Ausführungsform ist die X-Richtung bestimmt durch die Transportrichtung der Stückgüter von dem Aufnahmebereich 11 hin zu der stromab gelegenen Ablagefläche 50.

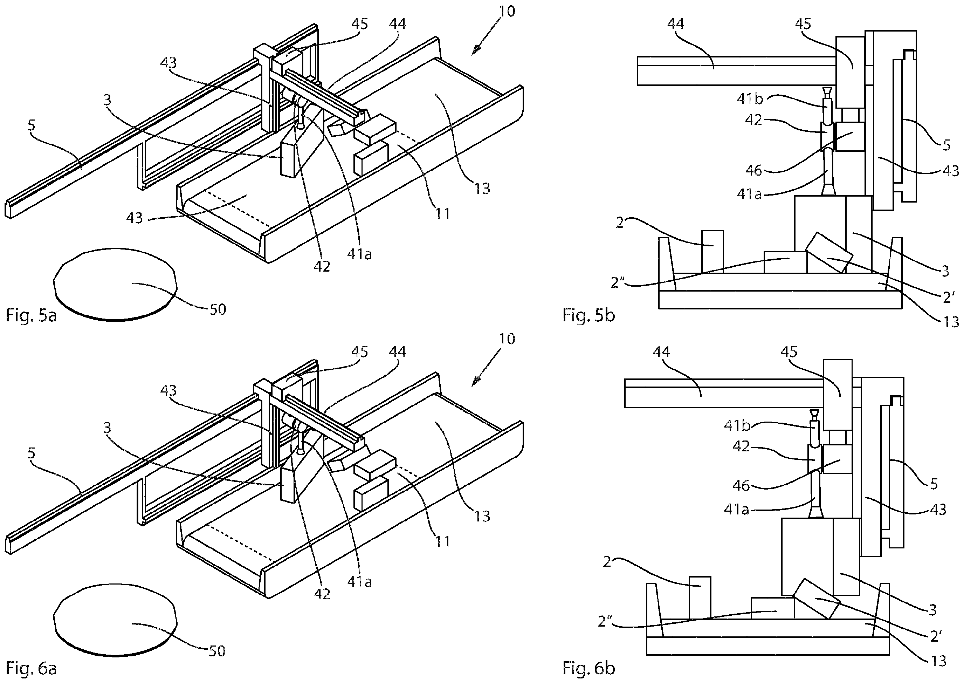

Figuren 5a, 5b und 6a, 6b zeigen jeweils eine Schrägansicht und eine Hinteransicht von verschiedenen Verfahrenssituationen beim Vereinzeln von Stückgütern. Bei der in den Figuren 5a und 5b gezeigten Verfahrenssituation ist ein Saugkopf 41a eines Sauggreifers auf eine obere Seitenfläche eines Stückgutes 3 aufgesetzt. Wie es bei Figur 5b zu erkennen ist, umfasst der Sauggreifer bei der gezeigten Ausführungsform einen zentralen Drehkörper 42, der an einem Drehkörperhalter 46 drehbar um eine horizontal ausgebildete Drehachse gelagert ist. An dem Drehkörper 42 sind zwei Saugköpfe angeordnet, und zwar der auf dem Stückgut 3 aufsitzende Saugkopf 41a und der gegenüber angeordnete Saugkopf 41b. Wie es bei Figur 5b (und 6b) zu erkennen ist, ist der Durchmesser des Saugkopfes 41a größer als der des Saugkopfes 41b, d. h. der Saugkopf 41a ist zur Aufnahme von größeren Stückgütern bzw. dem Aufsetzen auf größeren Flächen von Stückgütern vorgesehen.

In den Figuren 6a, 6b ist eine weiter fortgeschrittene Verfahrenssituation gezeigt, in welcher der Sauggreifer an der Y-Führung 44 weiter hochgefahren ist, wobei das Stückgut 3 aufgrund der Saugwirkung, die über den Sauggreifer auf die obere Seitenfläche ausgewirkt wird, von dem Aufnahmebereich 11 angehoben ist. Wie es den Figuren 5a und 6a sowie den vorhergehenden Figuren zu entnehmen ist, ist das Stückgut 3 frei in dem Aufnahmebereich 11 angeordnet, so dass kein anderes Stückgut das Aufnehmen des Stückgutes 3 behindert.

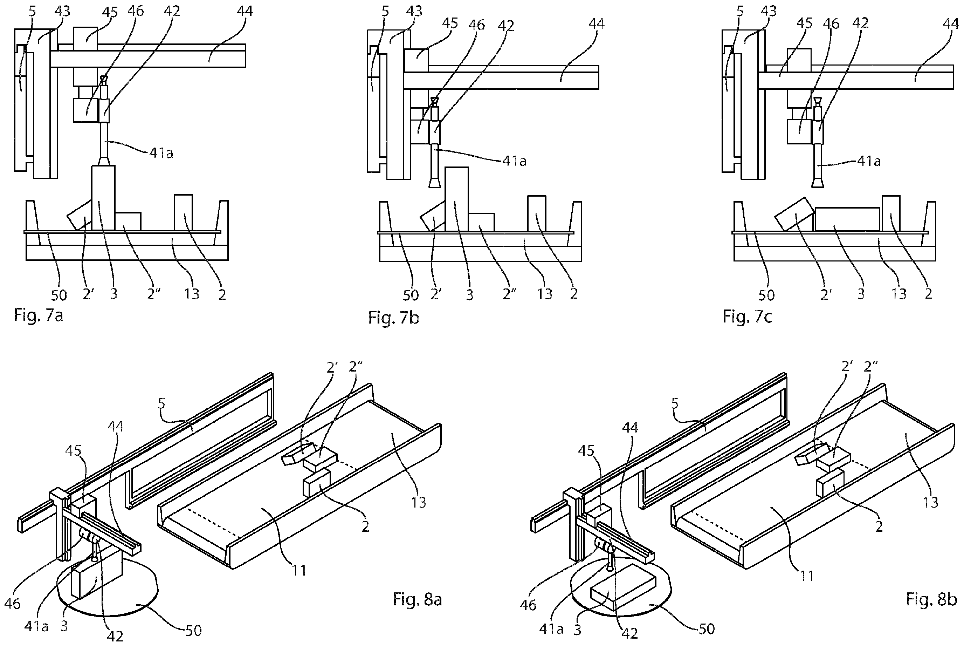

Figuren 7a, 7b und 7c zeigen Vorderansichten weiterer Verfahrenssituationen gemäß einer bevorzugten Ausführungsform des erfindungsgemäßen Verfahrens. Bei Figur 7a ist das Stückgut 3 auf einer Ablagefläche 50 abgesetzt, und zwar im "linken" Teil der Ablagefläche. Wie es Figur 7a und den vorhergehenden Figuren zu entnehmen ist, ist bei dem Stückgut 3 die größte Auflagefläche eine seitliche, an der X-Richtung ausgerichtete Fläche des Stückgutes, und bei der hier beschriebenen bevorzugten Ausführungsform ist diese größte Seitenfläche als die Einlagerungsfläche festgelegt. Um das Stückgut 3 nun auf dieser Einlagerungsfläche abzusetzen, wird die Fördereinrichtung 40 derart verfahren, dass der Saugkopf 41a links von dem Stückgut 3 derart angeordnet ist, dass sich der Saugkopf unterhalb der Oberkante des Stückgutes 3 befindet. Um das Stückgut auf die Einlagerungsfläche zu bewegen, wird der Sauggreifer auf der Y-Führung 44 nach rechts verfahren, so dass das Stückgut 3 mit dem Saugkopf 41a umgestoßen wird. Resultat ist, dass das Stückgut, wie es in Figur 7c gezeigt ist, auf der als Einlagerungsfläche bestimmten größten Seitenfläche aufliegt. In dieser Ausrichtung kann es dann von einem (nicht gezeigten) Bediengerät auf beispielsweise ein Einlagerungsband der (ebenfalls nicht gezeigten) Kommissioniervorrichtung bewegt werden, von wo es dann auf den endgültigen Lagerplatz bewegt wird.

Die Figuren 8a und 8b zeigen Schrägansichten der in den Figuren 7a und 7c gezeigten Verfahrenssituationen, um diese optisch zu veranschaulichen.

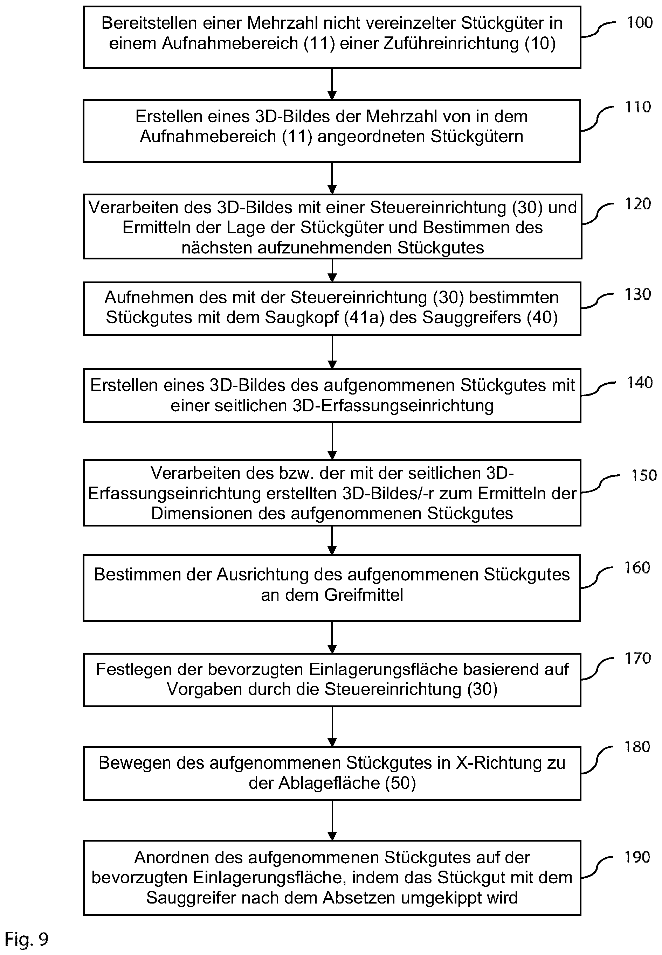

Im Nachfolgenden wird eine bevorzugte Ausführungsform des erfindungsgemäßen Verfahrens zum Vereinzeln von in eine Kommissioniervorrichtung einzulagernden Stückgütern anhand des Ablaufdiagramms von Figur 9 beschrieben. Zunächst wird in einem Schritt 100 eine Mehrzahl von nicht vereinzelten Stückgütern in einem Aufnahmebereich 11 einer Zuführeinrichtung 10, wie sie in den vorstehenden Figuren detaillierter beschrieben ist, bereitgestellt. Bei den Stückgütern kann es sich insbesondere um Arzneimittelpackungen handeln, die nach einer Vereinzelung mit der erfindungsgemäßen Vorrichtung in eine Apotheken-Kommissioniervorrichtung einzulagern sind. Sobald die Stückgüter bereitgestellt sind, wird in einem Schritt 110 mit einer oberhalb der Zuführeinrichtung angeordneten 3D-Erfassungseinrichtung (beispielsweise einer einfachen 3D-Kamera) ein 3D-Bild der Mehrzahl von Stückgütern aufgenommen. Dieses 3D-Bild wird in einem Schritt 120 mit einer Steuereinrichtung 30, die mit der 3D-Erfassungseinrichtung gekoppelt ist, verarbeitet und es wird die Lage der einzelnen Stückgüter ermittelt. Daraus wird dann das nächste aufzunehmende Stückgut bestimmt, wobei es sich dabei regelmäßig um ein solches Stückgut handelt, das nicht von anderen Stückgütern überlagert ist. Bei den vorhergehenden Figuren ist dies beispielsweise das nachher aufgenommene Stückgut 3. Anschließend wird das zuvor bestimmte Stückgut in einem Schritt 130 mit einem Saugkopf 41a des Sauggreifers aufgegriffen, und zwar bei der Seitenfläche des Stückgutes, welche für den Sauggreifer am besten zu erreichen ist. Sobald das Stückgut aufgenommen ist, wird in einem Schritt 140 mit einer seitlich angeordneten 3D-Erfassungseinrichtung, bei der es sich auch um eine 3D-Kamera handeln kann, ein 3D-Bild des aufgenommenen Stückgutes erstellt. In einem Schritt 150 wird dieses 3D-Bild verarbeitet, und zwar mit dem Ziel, die Dimensionen des aufgenommenen Stückgutes zu ermitteln. Für den Fall, dass anhand des 3D-Bildes nicht alle drei Dimensionen ermittelt werden können, wird das aufgenommene Stückgut um einen vorgegebenen Wert um die Z-Achse gedreht und es wird ein weiteres 3D-Bild erstellt, welches einer entsprechenden Bearbeitung nach Schritt 150 unterzogen wird. Dies wird so lange wiederholt, bis alle Dimensionen ermittelt sind. Auf der Basis der Dimensionen des Stückgutes wird in einem Schritt 160 dessen Ausrichtung bestimmt. So kann festgestellt werden, wo beispielsweise die größte Auflagefläche des Stückgutes angeordnet ist. So ist es beispielsweise denkbar, dass das Stückgut über eine größte Aufnahmefläche aufgenommen ist, welche seitlich oder bei einer Stirnfläche (bezogen auf die X-Richtung) angeordnet ist. Nachdem die Ausrichtung ermittelt ist, wird in einem Schritt 170 die bevorzugte Einlagerungsfläche basierend auf Vorgaben durch die Steuereinrichtung festgelegt. Die Steuereinrichtung der erfindungsgemäßen Vorrichtung ist regelmäßig mit einer Steuereinrichtung der Kommissioniervorrichtung gekoppelt, in welche die Stückgüter einzulagern sind, und in Abhängigkeit von den zur Verfügung stehenden Lagerplätzen kann die Steuereinrichtung der Kommissioniervorrichtung beispielsweise vorgeben, dass sämtliche Stückgüter derart einzulagern sind, dass ihre längste Seitenfläche beispielsweise an der Y-Richtung auszurichten ist. Sofern hinsichtlich des Lagerplatzes keine Restriktionen vorliegen, wird es jedoch regelmäßig so sein, dass die größte Auflagefläche eines Stückgutes auch die bevorzugte Einlagerungsfläche ist, da so sichergestellt werden kann, dass das Stückgut sicher und ohne Kippgefahr in die Kommissioniervorrichtung eingelagert werden kann. Nachdem oder während die bevorzugte Einlagerungsfläche festgelegt ist, wird in einem Schritt 180 das aufgenommene Stückgut in X-Richtung zu der Ablagefläche 50 bewegt, auf welcher das aufgenommene Stückgut in einem Schritt 190 auf der bevorzugten Einlagerungsfläche angeordnet wird, wobei dann, wenn die bevorzugte Einlagerungsfläche beispielsweise seitlich angeordnet ist, das Stückgut angeordnet wird, indem das Stückgut mit dem Sauggreifer nach dem ersten Absetzen gekippt wird.

## Patentansprüche

1. Vorrichtung (1) zum Vereinzeln von in eine Kommissioniervorrichtung einzulagernden Stückgütern (2), aufweisend:
eine Zuführeinrichtung (10) zum Bereitstellen einer Mehrzahl von nicht vereinzelten Stückgütern in einem sich in einer X- und Y-Richtung der Vorrichtung erstreckenden Aufnahmebereich (11),
eine in Z-Richtung, orthogonal zur X- und Y-Richtung, oberhalb der Zuführeinrichtung (10) angeordnete obere Erfassungseinrichtung (20) zum Erfassen von Bildern von auf der Zuführeinrichtung (10) in dem Aufnahmebereich (11) angeordneten Stückgütern (2, 3),
eine mit der oberen Erfassungseinrichtung (20) gekoppelte Steuereinrichtung (30) zum Auswerten von mit der oberen Erfassungseinrichtung (20) erstellten Bildern und zum Bestimmen eines aus der Mehrzahl von Stückgütern aufzunehmenden Stückgutes (3),
eine mit der Steuereinrichtung (30) gekoppelte Fördereinrichtung (40) mit einem um die Z-Achse drehbaren Greifmittel (41a, 41b) zum Aufnehmen eines von der Steuereinrichtung (30) bestimmten Stückgutes (2) aus der Mehrzahl von Stückgütern,
eine in X-Richtung stromab des Aufnahmebereichs (11) angeordnete Ablagefläche (50) zum Ablegen von mit der Fördereinrichtung (40) aufgenommenen Stückgütern, **gekennzeichnet durch**
eine seitliche Erfassungseinrichtung (60) zum Erstellen von zumindest einem Bild eines von der Fördereinrichtung (40) aufgenommenen Stückgutes (3), wobei die Steuereinrichtung so konfiguriert ist, dass das zumindest eine mit der seitlichen Erfassungseinrichtung (60) erstellte Bild zum Ermitteln der Dimensionen des aufgenommenen Stückgutes verarbeitet wird, wobei dann, wenn nicht alle Dimensionen des aufgenommenen Stückgutes bestimmbar sind, das aufgenommene Stückgut um einen vorgegebenen Winkel um die Z-Achse gedreht wird und ein weiteres Bild erstellt wird,
und basierend auf den Ergebnissen der Bildverarbeitung die Ausrichtung des aufgenommenen Stückgutes ermittelt wird und in Abhängigkeit von Vorgaben durch die Steuereinrichtung die bevorzugte Einlagerungsfläche des aufgenommenen Stückgutes festgelegt wird,
wobei
die Fördereinrichtung (40) in Abhängigkeit von der Ausrichtung und der bevorzugten Einlagerungsfläche derart angesteuert wird, dass ein aufgenommenes Stückgut auf einer bevorzugten Einlagerungsfläche auf der Ablagefläche (50) angeordnet wird, wobei die Erfassungseinrichtung (20) eine 3D-Erfassungseinrichtung von 3D-Bildern ist.

2. Vorrichtung (1) zum Vereinzeln von in eine Kommissioniervorrichtung einzulagernden Stückgütern (2) nach Anspruch 1, **dadurch gekennzeichnet, dass** die seitliche Erfassungseinrichtung (60) als eine 3D-Erfassungseinrichtung ausgebildet ist.

3. Vorrichtung (1) zum Vereinzeln von in eine Kommissioniervorrichtung einzulagernden Stückgütern (2) nach Anspruch 1 oder 2, **dadurch gekennzeichnet, dass** die Fördereinrichtung (40) als in X-, Y- und Z-Richtung bewegbarer Sauggreifer mit zumindest einem um die Z-Achse drehbaren Saugkopf (41a) ausgebildet ist.

4. Vorrichtung (1) zum Vereinzeln von in eine Kommissioniervorrichtung einzulagernden Stückgütern (2) nach Anspruch 3, **dadurch gekennzeichnet, dass** der Sauggreifer zwei unterschiedlich dimensionierte Saugköpfe (41a, 41b) aufweist.

5. Vorrichtung (1) zum Vereinzeln von in eine Kommissioniervorrichtung einzulagernden Stückgütern (2) nach Anspruch 4, **dadurch gekennzeichnet, dass** der Sauggreifer (40) einen Drehkörper (42) aufweist, an welchem die Saugköpfe (41a, 41b) angeordnet sind, wobei der Drehkörper (42) um eine sich horizontal erstreckende Drehachse drehbar ist.

6. Vorrichtung (1) zum Vereinzeln von in eine Kommissioniervorrichtung einzulagernden Stückgütern (2) nach einem der Ansprüche 1 - 5, **dadurch gekennzeichnet, dass** die Ablagefläche (50) drehbar ausgebildet ist.

7. Verfahren zum Vereinzeln von in eine Kommissioniervorrichtung einzulagernden Stückgütern (2), wobei
a) mit einer Zuführeinrichtung (10) eine Mehrzahl von nicht vereinzelten Stückgütern (2) in einem sich in einer X- und Y-Richtung erstreckenden Aufnahmebereich (11) angeordnet werden,
b) mit einer in Z-Richtung, orthogonal zur X- und Y-Richtung, oberhalb der Zuführeinrichtung (10) angeordneten oberen 3D-Erfassungseinrichtung (20) zumindest ein 3D-Bild der Mehrzahl nicht vereinzelter Stückgüter (2) erstellt wird,
c) mit einer mit der 3D-Erfassungseinrichtung (20) gekoppelten Steuereinrichtung (30) das zumindest eine 3D-Bild zum Ermitteln der Lage der nicht vereinzelten Stückgüter (2) verarbeitet wird und bestimmt wird, welches Stückgut von der Mehrzahl der Stückgüter als nächstes aufgenommen wird,
d) das in Schritt c) ermittelte Stückgut (3) mit einem um die Z-Achse drehbaren Greifmittel (41a, 41b) einer Fördereinrichtung (40) aufgenommen wird,
e) mit einer seitlichen, mit der Steuereinrichtung (30) gekoppelten Erfassungseinrichtung (60) zumindest ein Bild des aufgenommenen Stückgutes (3) erstellt wird,
f) das zumindest eine mit der seitlichen Erfassungseinrichtung (60) erstellte Bild zum Ermitteln der Dimensionen des aufgenommenen Stückgutes verarbeitet wird,
g) wobei dann, wenn nicht alle Dimensionen des aufgenommenen Stückgutes bestimmbar sind, das aufgenommene Stückgut um einen vorgegebenen Winkel um die Z-Achse gedreht wird und die Schritte e) und f) so lange wiederholt werden, bis alle Dimensionen des aufgenommenen Stückgutes ermittelt sind,
h) basierend auf den Ergebnissen der Bildverarbeitung die Ausrichtung des aufgenommenen Stückgutes ermittelt wird und in Abhängigkeit von Vorgaben durch die Steuereinrichtung die bevorzugte Einlagerungsfläche des aufgenommenen Stückgutes festgelegt wird,
i) das aufgenommene Stückgut (3) zu einer in X-Richtung stromab des Aufnahmebereichs (11) angeordneten Ablagefläche (50) bewegt wird, und
j) das aufgenommene Stückgut auf einer bevorzugten Einlagerungsfläche auf der Ablagefläche (50) angeordnet wird.

8. Verfahren zum Vereinzeln von in eine Kommissioniervorrichtung einzulagernden Stückgütern (2) nach Anspruch 7, **dadurch gekennzeichnet, dass** das aufgenommene Stückgut (3) auf einer Einlagerungsfläche angeordnet wird, indem es zunächst auf einer anderen Fläche des aufgenommenen Stückgutes auf der Ablagefläche (50) angeordnet wird und anschließend auf die Einlagerungsfläche gekippt wird.

9. Verfahren zum Vereinzeln von in eine Kommissioniervorrichtung einzulagernden Stückgütern (2) nach Anspruch 7 oder 8, **dadurch gekennzeichnet, dass** mit der seitlichen Erfassungseinrichtung (60) ein 3D-Bild des aufgenommenen Stückgutes erstellt wird.

10. Verfahren zum Vereinzeln von in eine Kommissioniervorrichtung einzulagernden Stückgütern (2) nach einem der Ansprüche 7 - 9, **dadurch gekennzeichnet, dass** das aufgenommene Stückgut (3) vor dem Anordnen auf der Ablagefläche (50) nach Vorgaben der Steuereinrichtung um die Z-Achse gedreht wird.

11. Verfahren zum Vereinzeln von in eine Kommissioniervorrichtung einzulagernden Stückgütern (2) nach einem der Ansprüche 7 - 10, **dadurch gekennzeichnet, dass** das aufgenommene Stückgut zum Bestimmen eines Identifizierers um die Z-Achse gedreht und dabei von der seitlichen Erfassungseinrichtung (60) abgetastet wird.

## Claims

1. A device (1) for separating piece goods (2) to be stored in a picking device, comprising:
a feed device (10) for providing a plurality of non-separated piece goods in a receiving area (11) extending in an X- and Y-direction of the device,
an upper recording device (20) situated in the Z-direction, orthogonal to the X- and Y-directions, above the feed device (10) for capturing images of piece goods (2, 3) situated on the feed device (10) in the receiving area (11),
a control device (30) coupled to the upper recording device (20) for evaluating images produced with the upper recording device (20) and for determining a piece good (3) to be picked from the plurality of piece goods,
a conveyor (40) coupled to the control device (30) having a gripping means (41a, 41b) rotatable about the Z-axis for picking a piece good (2) determined by the control device (30) from the plurality of piece goods,
a deposit surface (50) situated downstream from the receiving area (11) in the X-direction for depositing piece goods picked by the conveyor (40), **characterized by**
a lateral recording device (60) for producing at least one image of a piece good (3) picked by the conveyor (40), wherein the control device is configured so that the at least one image produced with the lateral recording device (60) is processed for ascertaining the dimensions of the picked piece good, wherein, if not all dimensions of the picked piece good are able to be determined, the picked piece good is rotated by a predetermined angle about the Z-axis and another image is produced,
and based on the results of the image processing, the orientation of the picked piece good is ascertained and the preferred storage surface of the picked piece good is established on the basis of specifications by the control device,
wherein the conveyor (40) is activated as a function of the orientation and of the preferred storage surface in such a way that a picked piece good is situated on a preferred storage surface on the deposit surface (50), wherein the recording device (20) is a 3D recording device for capturing 3D images.

2. The device (1) for separating piece goods (2) to be stored in a picking device according to claim 1, **characterized in that** the lateral recording device (60) is designed as a 3D recording device.

3. The device (1) for separating piece goods (2) to be stored in a picking device according to claim 1 or 2, **characterized in that** the conveyor (40) is designed as a suction gripper movable in the X-, Y- and Z-directions, having at least one suction head (41a) rotatable about the Z-axis.

4. The device (1) for separating piece goods (2) to be stored in a picking device according to claim 3, **characterized in that** the suction gripper has two differently dimensioned suction heads (41a, 41b).

5. The device (1) for separating piece goods (2) to be stored in a picking device according to claim 4, **characterized in that** the suction gripper (40) has a rotary body (42) on which the suction heads (41a, 41b) are situated, wherein the rotary body (42) is rotatable about a horizontally extending rotation axis.

6. The device (1) for separating piece goods (2) to be stored in a picking device according to any of claims 1 through 5, **characterized in that** the deposit surface (50) is rotatable.

7. A method for separating piece goods (2) to be stored in a picking device, wherein
a) a plurality of non-separated piece goods (2) are situated with a feed device (10) in a receiving area (11) extending in an X- and Y-direction,
b) at least one 3D image of the plurality of non-separated piece goods (2) is produced using an upper 3D recording device (20) situated in the Z-direction, orthogonal to the X- and Y-direction, above the feed device (10),
c) the at least one 3D image is processed using a 3D recording device (20) coupled to the control device (30) for ascertaining the position of the non-separated piece goods (2), and it is determined which piece good of the plurality of piece goods is picked next,
d) the piece good (3) ascertained in step c) is picked using a gripping means (41a, 41b) of a conveyor (40), which is rotatable about the Z-axis,
e) at least one image of the picked piece good (3) is produced using a lateral recording device (60) coupled to the control device (30),
f) the at least one image produced using the lateral recording device (60) is processed to ascertain the dimensions of the picked piece good,
g) wherein, if not all dimensions of the picked piece good are able to be determined, the picked piece good is rotated by a predetermined angle about the Z-axis and steps e) and f) are repeated until all dimensions of the picked piece good are ascertained,
h) based on the results of the image processing, the orientation of the picked piece good is ascertained and the preferred storage surface of the picked piece good is established on the basis of specifications by the control device,
i) the picked piece good (3) is moved to a deposit surface (50) situated downstream from the receiving area (11) in the X-direction, and
j) the picked piece good is situated on a preferred storage surface on the deposit surface (50).

8. The method for separating piece goods (2) to be stored in a picking device according to claim 7, **characterized in that** the picked piece good (3) is situated on a storage surface by first being situated on another surface of the picked piece good on the deposit surface (50) and then being tipped onto the storage surface.

9. The method for separating piece goods (2) to be stored in a picking device according to claim 7 or 8, **characterized in that** a 3D image of the picked piece good is produced using the lateral recording device (60).

10. The method for separating piece goods (2) to be stored in a picking device according to any of claims 7 through 9, **characterized in that** the picked piece good (3) is rotated about the Z-axis according to specifications of the control device before being situated on the deposit surface (50).

11. The method for separating piece goods (2) to be stored in a picking device according to any of claims 7 through 10, **characterized in that** the picked piece good is rotated about the Z-axis and scanned in the process by the lateral recording device (60) for determining an identifier.

## Revendications

1. Dispositif (1) pour séparer des articles (2) à stocker dans un dispositif de préparation de commandes, présentant :
un dispositif d'alimentation (10) pour la mise à disposition d'une pluralité d'articles non séparés dans une zone de réception (11) s'étendant dans une direction X et Y du dispositif,
un dispositif de détection supérieur (20) disposé dans la direction Z, orthogonalement aux directions X et Y, au-dessus du dispositif d'alimentation (10), pour détecter des images d'articles (2, 3) disposés sur le dispositif d'alimentation (10) dans la zone de réception (11),
un dispositif de commande (30) couplé au dispositif de détection supérieur (20) pour évaluer des images réalisées avec le dispositif de détection supérieur (20) et pour déterminer un article (3) à prélever parmi la pluralité d'articles,
un dispositif de transport (40) couplé au dispositif de commande (30) avec un moyen de préhension (41a, 41b) pouvant tourner autour de l'axe Z pour prendre un article (2) déterminé par le dispositif de commande (30) parmi la pluralité d'articles,
une surface de dépôt (50) disposée en aval de la zone de réception (11) dans la direction X pour déposer des articles reçus avec le dispositif de transport (40), **caractérisé par**
un dispositif de détection latéral (60) pour établir au moins une image d'un article prise en charge (3) par le dispositif de transport (40), le dispositif de commande étant configuré de telle sorte que l'au moins une image établie avec le dispositif de détection latéral (60) est traitée pour déterminer les dimensions de l'article reçue, l'article reçue étant alors tournée d'un angle prédéfini autour de l'axe Z et une autre image étant établie si toutes les dimensions de l'article reçue ne peuvent pas être déterminées,
et, sur la base des résultats du traitement d'image, l'orientation de l'article prise en charge est déterminée et, en fonction de consignes données par le dispositif de commande, la surface de stockage préférée de l'article prise en charge est déterminée,
le dispositif de transport (40) étant commandé en fonction de l'orientation et de la surface de stockage préférée de telle sorte qu'un article reçue est disposée sur une surface de stockage préférée sur la surface de dépôt (50), le dispositif de détection (20) étant un dispositif de détection 3D d'images 3D.

2. Dispositif (1) pour séparer des articles (2) à stocker dans un dispositif de préparation de commandes selon la revendication 1, **caractérisé en ce que** le dispositif de détection latéral (60) est conçu comme un dispositif de détection 3D.

3. Dispositif (1) pour séparer des articles (2) à stocker dans un dispositif de préparation de commandes selon la revendication 1 ou 2, **caractérisé en ce que** le dispositif de transport (40) est conçu comme une ventouse mobile dans les directions X, Y et Z avec au moins une tête d'aspiration (41a) pouvant tourner autour de l'axe Z.

4. Dispositif (1) pour séparer des articles (2) à stocker dans un dispositif de préparation de commandes selon la revendication 3, **caractérisé en ce que** la ventouse présente deux têtes d'aspiration (41a, 41b) de dimensions différentes.

5. Dispositif (1) pour séparer des articles (2) à stocker dans un dispositif de préparation de commandes selon la revendication 4, **caractérisé en ce que** la ventouse (40) présente un corps rotatif (42) sur lequel sont disposées les têtes d'aspiration (41a, 41b), le corps rotatif (42) pouvant tourner autour d'un axe de rotation s'étendant horizontalement.

6. Dispositif (1) pour séparer des articles (2) à stocker dans un dispositif de préparation de commandes selon l'une des revendications 1 à 5, **caractérisé en ce que** la surface de dépôt (50) est conçue de manière rotative.

7. Procédé pour séparer des articles (2) à stocker dans un dispositif de préparation de commandes, dans lequel
a) avec un dispositif d'alimentation (10), une pluralité d'articles (2) non séparés sont disposés dans une zone de réception (11) s'étendant dans une direction X et Y,
b) avec un dispositif de détection 3D supérieur (20), disposé dans la direction Z, orthogonalement aux directions X et Y, au-dessus du dispositif d'alimentation (10), on réalise au moins une image 3D de la pluralité d'articles non séparés (2),
c) à l'aide d'un dispositif de commande (30) couplé au dispositif de détection 3D (20), on traite l'au moins une image 3D pour déterminer la position des articles non séparés (2) et on détermine quel article de la pluralité d'articles doit être pris en charge ensuite,
d) l'article (3) déterminée à l'étape c) est saisie par un moyen de préhension (41a, 41b) pouvant tourner autour de l'axe Z d'un dispositif de transport (40),
e) au moins une image de l'article prise en charge (3) est établie avec un dispositif de détection latéral (60) couplé au dispositif de commande (30),
f) l'au moins une image réalisée avec le dispositif de détection latéral (60) est traitée pour déterminer les dimensions de l'article saisie,
g) dans lequel, si toutes les dimensions de l'article prise en charge ne peuvent pas être déterminées, l'article prise en charge est tourné d'un angle prédéfini autour de l'axe Z et les étapes e) et f) sont répétées jusqu'à ce que toutes les dimensions de l'article prise en charge soient déterminées,
h) l'orientation de l'article prise en charge est déterminée sur la base des résultats du traitement d'image et la surface de stockage préférée de l'article prise en charge est définie en fonction de consignes données par le dispositif de commande,
i) l'article prise en charge (3) est déplacée vers une surface de dépôt (50) disposée en aval de la zone de réception (11) dans la direction X, et
j) l'article prise en charge est placée sur une surface de stockage préférée sur la surface de dépôt (50).

8. Procédé pour séparer des articles (2) à stocker dans un dispositif de préparation de commandes selon la revendication 7, **caractérisé en ce que** l'article prise en charge (3) est disposé sur une surface de stockage en étant d'abord disposé sur une autre surface de l'article prise en charge sur la surface de dépôt (50) et en étant ensuite basculé sur la surface de stockage.

9. Procédé pour séparer des articles (2) à stocker dans un dispositif de préparation de commandes selon la revendication 7 ou 8, **caractérisé en ce qu'**une image 3D de l'article prise en charge est réalisée avec le dispositif de détection latéral (60) .

10. Procédé pour séparer des articles (2) à stocker dans un dispositif de préparation de commandes selon l'une des revendications 7 à 9, **caractérisé en ce que** l'article prise en charge (3) est tournés autour de l'axe Z selon les indications du dispositif de commande avant d'être disposés sur la surface de dépôt (50).

11. Procédé pour séparer des articles (2) à stocker dans un dispositif de préparation de commandes selon l'une des revendications 7 à 10, **caractérisé en ce que** l'article prise en charge est tournés autour de l'axe Z pour déterminer un identificateur et est balayé par le dispositif de détection latéral (60).
